# EUROPÄISCHE PATENTANMELDUNG

(11) **EP 2 236 956 A1**
(43) Veröffentlichungstag der Anmeldung: **06.10.2010**
(21) Anmeldenummer: 09004803.4
(22) Anmeldetag: 01.04.2009
(51) Int. Cl.: F24J 2/38

(54) **Solaranlagenausrichtwerkzeug**

(71) Anmelder: Deger, Artur, 72296 Schopfloch-Oberiflingen (DE)
(72) Erfinder: Deger, Artur, 72296 Schopfloch-Oberiflingen (DE)
(74) Vertreter: Klocke, Peter

(57) **Zusammenfassung**

Die Erfindung betrifft ein Solaranlagenausrichtwerkzeug (1) zum Ausrichten von insbesondere der Sonne nachführbaren Solarmodulen orthogonal zu der Einfallsrichtung der Sonnenstrahlen (5). Das Ausrichtwerkzeug (1) weist ein im wesentlichen strahlungsundurchlässiges Gehäuse (2) mit einer Standfläche (3) und einer der Standfläche (3) parallel gegenüberliegenden Frontfläche (4) auf. Die Frontfläche (4) ist mit einem kreis-, linien- oder kreuzförmigen Durchbruch (6) ausgebildet, der auf einer sich in dem Gehäuse (2) zwischen der Standfläche (3) und der Frontfläche (4) erstreckende nahe der Standfläche (3) angeordnete Projektionsfläche (7) auf, auf die die Sonnenstrahlen (5) den Durchbruch (6) abhängig von der Einfallsrichtung der Sonnenstrahlen (5) in das Gehäuse (2) abbilden. Die Projektionsfläche (7) weist eine mit der Mittelachse (13) des Durchbruchs (6) der Frontfläche (4) fluchtende Markierung (10) mit einer daneben angeordneten Skala (11) auf, wobei die Projektionsfläche (7) durch ein Sichtfenster (9) in der Seitenwand (8) des Gehäuses (2) einsehbar ist. (Figur)

## Beschreibung

Die Erfindung betrifft ein Solaranlagenausrichtwerkzeug zum Ausrichten, von insbesondere der Sonne nachführbaren Solarmodulen orthogonal zu der Einfallsrichtung der Sonnenstrahlen.

Der Sonnenenergienutzung im Bereich der Photovoltaik kommt durch die zunehmende Verknappung der nicht emeuerbaren Energien sowie durch die zunehmende Umweltverschmutzung durch Treibhausgase bei dem Gebrauch von fossilen Energieträgem eine immer größere Bedeutung zu.

Photovoltaik zur direkten elektrischen Energieumwandlung von Sonnenstrahlung ist allgemein bekannt. Bekannt sind in diesem Zusammenhang in Ost-West-Richtung konstant angeordnete Ständer, Gebäudeflächen oder Gestelle, die es ermöglichen, so genannte Solarmodule auf der südlichen Seite zu betreiben. Die Träger der Solarmodule solcher in der Himmelsrichtung unveränderlicher Anordnungen sind einfach und kostengünstig her- und aufstellbar. Eine derartige konstante nach Süden orientierte Anordnung liefert nur zu einem bestimmten begrenzten Tageszeitabschnitt, speziell in der Mittagszeit, einen optimalen Energieertrag.

Eine in Ihrer Ausrichtung nicht veränderbare Photovoltaikanlage kann nur über einen längeren Tageszeitabschnitt optimal arbeiten, wenn eine gegenüber den Solarmodulen ortsfeste Strahlenquelle vorhanden ist. Da die Erde jedoch um die Sonne kreist, verändert sich in der Praxis fortlaufend der Standpunkt der Sonne in Bezug auf die aufgestellten Solarmodule. Die Sonne bewegt sich dabei kontinuierlich von Osten über Süden nach Westen, so dass konstante Photovoltaikanlagen, bedingt durch den sich kontinuierlich ändernden Einfallwinkel der Sonnenstrahlung gegenüber den Solarmodulen, nur einen kleinen Teil der tatsächlich vorhandenen Sonnenstrahlung laufend in elektrische Energie umwandeln. Zudem variiert die Höhe der Sonne gegenüber dem Horizont im Tagesverlauf, was wiederum bei konstanten Photovoltalkanlagen zu einer Minderung des Ertrages über den Tag gesehen führt.

Weiterhin ist es bekannt, Solarmodule von Photovoltalkanlagen mit dem Ziel einer erheblichen Ertragssteigerung dem aktuellen Lauf der Sonne nachzuführen. Nach dem Stand der Technik gibt es dafür drehbare einachsige und zweiachsige Nachführsysteme in vielfältigen Ausführungsformen mit den dazu notwendigen elektronischen Steuerungen. Dabei erfolgt die Positionierung und Ausrichtung bzw. die Nachführung der Solarmodule mit Blick zum aktuellen Lauf der Sonne durch Dreh- und/oder Kippbewegungen um vorgesehene reale oder imaginäre Achsen. Zur Erhöhung des Wirkungsgrades kann die Steuerung derartiger Nachführsysteme den Höhenneigungswinkel der Solarmodule zusätzlich entsprechend der Jahreszeit verändern. Die oft auf wenige Stunden am Tag begrenzte Arbeitszeit einer konstanten Photovoltaikanlage wird durch eine solche elektrische Nachführeinrichtung wesentlich, d.h. um zirka 30-40% erhöht und somit ein optimaler Nutzeffekt erzielt.

Wie der Fachmann weiß, ist die Energieausbeute eines Solarmoduls dann optimal, wenn es orthogonal zur Einfallrichtung der Sonnenstrahlung ausgerichtet ist. Dies gilt insbesondere auch zu jedem Zeitpunkt bei der Sonne nachführbaren Solarmodulen. Zur Grundeinstellung der Solarmodule stehen bisher elektronische Messgeräte zur Lichteinfallswinkelmessung zur Verfügung, die mindestens zweiwinkelig zueinander angeordnete Lichtsensoren aufweisen, die abhängig von der Lichteinstrahlung gleiche oder unterschiedliche Ausgangssignale erzeugen, deren Verhältnis auf den Lichteinfallswinkel schließen lässt. Derartige elektronische Messgeräte sind teuer, störanfällig und setzen speziell geschulte Monteure voraus.

Ausgehend von dem vorstehend beschriebenen Stand der Technik liegt der Erfindung die Aufgabe zugrunde, ein einfach zu bedienendes, kostengünstiges, insbesondere nur mechanisch wirkendes Solaranlagenausrichtwerkzeug vorzuschlagen.

Das erfindungsgemäße Solaranlagenausrichtwerkzeug weist ein strahlungsundurchlässiges Gehäuse mit einer Standfläche zum Aufsetzen auf das Solarmodul und eine der Standfläche gegenüberliegende Frontfläche auf, wobei an der Frontfläche ein kreis-, linien- oder kreuzförmiger Durchbruch als Loch-, Spalt- bzw. Kreuzblende angeordnet ist. Weiterhin erstreckt sich in dem Gehäuse parallel zu der Standfläche und der Frontfläche eine nahe der Standfläche angeordnete Projektionsfläche mit einer mit der Mittelachse des Durchbruchs der Frontfläche fluchtenden Markierung. Außerdem weist das Gehäuse an der Seitenwand ein der Projektionsfläche zugeordnetes Sichtfenster auf.

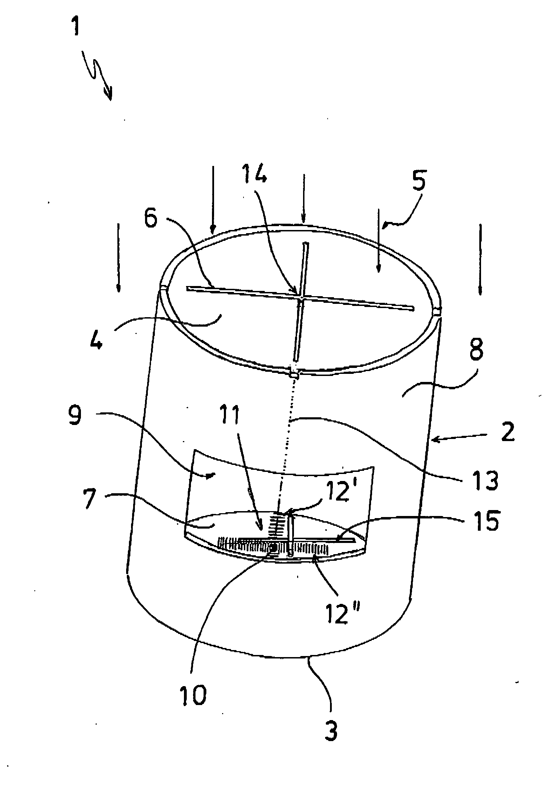

Wie vorstehend bereits angegeben, erzielt man bei Solarmodulen den höchsten Ertrag, wenn die Sonneneinstrahlung im 90 Grad-Winkel auf das Solarmodul trifft. Um eine Feinjustierung der Solarmodule vorzunehmen, wird das Solaranlagenausrichtwerkzeug mit der Standfläche auf die der Sonne zugeordnete Oberfläche des Solarmoduls aufgesetzt. Das Ausrichtwerkzeug steht exakt im 90 Grad-Winkel auf dem Solarmodul. Bei der Grundausrichtung des Solarmoduls fällt die Sonnenstrahlung durch den an der Frontfläche des strahlungsundurchlässigen Gehäuses vorgesehenen Durchbruch in das Gehäuse des Solaranlagenausrichtwerkzeugs, wobei die Form der Blende auf die entfernt von der Frontfläche angeordnete Projektionsfläche projiziert wird. Bei genau senkrechtem Einfall der Sonnenstrahlung in das Gehäuse wird die Loch-, Spalt-oder Kreuzblende derart auf die Projektionsfläche abgebildet, dass der Mittelpunkt der Abbildung des Durchbruchs mit der Markierung auf der bruchs mit der Markierung auf der Projektionsfläche zusammenfällt. Fällt die Sonnenstrahlung nicht senkrecht zu der Frontfläche in das Gehäuse des Solaranlagenausrichtwerkzeugs ein, so ist die Abbildung des Durchbruchs seitlich gegenüber der Markierung auf der Projektionsfläche versetzt.

Mit Hilfe des Sichtfensters in der Seitenwand des Gehäuses des Ausrichtwerkzeuges kann der Benutzer des Solaranlagenausrichtwerkzeugs die Projektionsfläche des abgedunkelten Gehäuses beobachten und Abweichungen des Mittelpunktes der Abbildung von der Markierung feststellen. Dabei erscheint die Abbildung als heller Punkt, als helle Linie oder als helles Kreuz auf der abgeschotteten und damit dunklen Projektionsfläche. Unter Beobachtung der Projektionsfläche kann das Solarmodul solange motorisch oder händisch geschwenkt werden, bis das Solarmodul genau senkrecht zu der Einfallsrichtung der Sonnenstrahlen ausgerichtet ist, was daran erkennbar ist, dass der Mittelpunkt der Abbildung des Durchbruchs der Frontfläche mit dem Mittelpunkt der Markierung auf der Projektionsfläche übereinstimmt.

Anstelle einer lichtundurchlässigen Frontfläche mit einem lichtdurchlässigen Durchbruch kann auch eine lichtdurchlässige Fangfläche mit einem lichtdurchlässigen kreis-, linien- oder kreuzförmigen Element vorgesehen sein. Für den Fall, dass die lichtundurchlässigen Elemente in der Ebene der Frontfläche bis zu den Seitenwänden des Gehäuses reichen und dort befestigt sind, kann auf eine geschlossene lichtdurchlässige Frontfläche verzichtet werden.

In einer bevorzugten Ausführungsform der Erfindung weist die Lochblende einen typischen Durchmesser bzw eine typische Schlitzbreite von 0,8 mm auf. Bei dieser typischen Breite wird der Durchbruch scharf auf der Projektionsfläche abgebildet und ermöglicht in Verbindung mit einer vorzugsweise optional vorgesehenen Skala im Bereich der Markierung ein genaues Ablesen der Gradstellung des Solarmoduls gegenüber der Sonne. Idealerweise hat das Solaranlagenausrichtwerkzeug zwei dieser Skalen je eine für die Ost-West- sowie eine für die Nord-Süd-Ausrichtung, so dass die Ausrichtung in einem einzigen Arbeitsgang vorgenommen werden kann, ohne das Ausrichtwerkzeug zu drehen. Idealerweise weist die Skala eine Gradeinteilung auf, so dass die Abweichung des Solarmoduls von der Solchstellung für die Eingabe in die elektrische Steuerung der Nachführeinrichtung direkt in Winkelgraden abgelesen werden kann.

In einer vorteilhaften Ausführungsform des erfindungsgemäßen Solaranlagenausrichtwerkzeugs ist das Gehäuse zylinderförmig ausgebildet. Vorzugsweise ist das Sichtfenster ein Durchbruch in der Seitenwand des Gehäuses, der den direkten Blick auf die Projektionsfläche im innern des Gehäuses ermöglicht. Dabei kann die Projektionsfläche des Solaranlagenausrichtwerkzeugs parallel oder geneigt zu der Standfläche bzw. zu der Frontfläche angeordnet sein.

Nachfolgend wird die Erfindung anhand eines in der Zeichnung dargestellten Ausführungsbeispiels näher erläutert. Weitere Merkmale der Erfindung ergeben sich aus der folgenden Beschreibung des Ausführungsbeispiels der Erfindung in Verbindung mit den Ansprüchen und der beigefügten Zeichnung. Die einzelnen Merkmale können für sich allein oder zu mehreren bei unterschiedlichen Ausführungsformen der Erfindung verwirklicht sein.

Die einzige Figur der Zeichnung zeigt ein erfindungsgemäßes Solaranlagenausrichtwerkzeug in perspektivischer Darstellung.

In dem dargestellten Ausführungsbeispiel weist das erfindungsgemäße Solaranlagenausrichtwerkzeug 1 ein zylinderförmiges Gehäuse mit einer Standfläche 3 und einer Frontfläche 4 auf. Mit der Standfläche 3 ist das Solarausrichtwerkzeug 1 auf ein in der Figur nicht dargestelltes Solarmodul aufgesetzt, das grob in Richtung der Sonne ausgerichtet ist, so dass die Frontfläche 4 des Gehäuses 1 annähernd senkrecht parallelen Sonnenstrahlen 5 ausgesetzt ist.

Die Frontfläche 4 weist einen zentral angeordneten kreisförmigen Durchbruch 6 als Kreuzblende auf. Die Kreuzblende 6 wird mittels der Sonnenstrahlen 5 auf eine im innern des Gehäuses 1 nahe der Standfläche 3 angeordneten Projektionsfläche 7 abgebildet, die sich parallel zu der Standfläche 3 und zu der Frontfläche 4 erstreckt. Zur Beobachtung der Projektionsfläche 4 ist in der Seitenwand 8 des Gehäuses 1 eine Ausnehmung 9 ausgebildet, die den Blick auf eine mittige Markierung 10 der Projektionsfläche 7 sowie auf eine Skala 11 im Bereich der Markierung gestattet. Als Skala 11 sind zwei sich orthogonal zu einander erstreckende Skalenbänder 12a, 12b vorgesehen, die sich kreuzweise entsprechend der Kreuzblende 6 erstrecken und eine Gradeinteilung aufweisen. Die Markierung 10 auf der Projektionsfläche 7 fluchtet mit einer Mittelachse 13 des Durchbruches 6.

In der Darstellung bildet die Mittelachse 13 des Durchbruches 6 auch die Mittelachse des zylindrischen Gehäuses 1, wobei die Mittelachse 13 einen Neigungswinkel von 5 Grad gegenüber den Sonnenstrahlen 5 aufweist. Die Standfläche 3, die Frontfläche 4 und die Projektionsfläche 7 erstrecken sich senkrecht gegenüber der Mittelachse 13. Fallen in dieser Stellung die Sonnenstrahlen 5 durch die fadenkreuzähnliche Kreuzblende 6 auf die skalierte Projektionsfläche 7, so bildet sie die Ausnehmung 6 mit einem entsprechenden Versatz zu der Markierung 10 auf der Projektionsfläche 7 ab. Steht die Fläche des Solarmoduls exakt im 90 Grad Winkel zur Sonne, so wird der Mittelpunkt 14 des Durchbruchs 6 exakt auf die Markierung 10 mittig abgebildet.

## Patentansprüche

1. Solaranlageausrichtwerkzeug (1) zum Ausrichten von der Sonne nachführbaren Solarmodulen orthogonal zu der Einfallsrichtung der Sonnenstrahlen (5), **gekennzeichnet durch** ein im wesentlichen strahlungsundurchlässiges Gehäuse (2) mit einer Standfläche (3) zum Aufsetzen auf das Solarmodul und mit einer der Standfläche (3) parallel gegenüberliegenden Frontfläche (4), einem an der Frontfläche (4) angeordneten kreis-, linien- oder kreuzförmigen Durchbruch (6) als Lochblende, Spaltblende bzw. Kreuzblende, eine sich in dem Gehäuse (1) zwischen der Standfläche (3) und der Frontfläche (4) erstreckende nahe der Standfläche (3) angeordnete Projektionsfläche (7), einer mit der Mittelachse (13) des Durchbruchs (6) der Frontfläche (4) fluchtenden Markierung (10) auf der Projektionsfläche (7) und ein der Projektionsfläche (7) zugeordnetes Sichtfenster (9) in der Seitenwand (8) des Gehäuses (1).

2. Solaranlagenausrichtwerkzeug nach Anspruch 1, **dadurch gekennzeichnet, dass** die Lochblende (10) einen typischen Durchmesser bzw. die Spalt- oder Kreuzblende eine typische Schlitzbreite von 0,8 mm aufweist.

3. Solaranlagenausrichtwerkzeug nach Anspruch 1 oder 2, **dadurch gekennzeichnet, dass** die Projektionsfläche (7) eine Skala (11, 12a, 12b) im Bereich der Markierung (10) aufweist.

4. Solaranlagenausrichtwerkzeug nach Anspruch 3, **dadurch gekennzeichnet, dass** die Skala eine Gradeinteilung aufweist.

5. Solaranlagenausrichtwerkzeug nach einem der vorangegangenen Ansprüche, **dadurch gekennzeichnet, dass** das Gehäuse (1) zylinderförmig ist.

6. Solaranlagenausrichtwerkzeug nach einem der vorangegangenen Ansprüche, **dadurch gekennzeichnet, dass** das Sichtfenster (9) eine Ausnehmung in der Seitenwand (8) des Gehäuses (1) ist.

7. Solaranlagenausrichtwerkzeug nach einem der vorangegangenen Ansprüche, **dadurch gekennzeichnet, dass** die Projektivnsfläche (7) parallel zu der Standfläche (3) und der Frontfläche (4) angeordnet ist.
